# EUROPEAN PATENT APPLICATION

(11) **EP 4 848 002 A1**
(43) Date of publication of application: **02.12.2026**
(21) Application number: 26179798.9
(22) Date of filing: 20.05.2026
(51) Int. Cl.: G03G 15/00

(54) **IMAGE FORMING APPARATUS THAT DETERMINES USAGE AMOUNT OF DEVELOPER**

(30) Priority: 28.05.2025 JP 2025089210
(71) Applicant: Canon Kabushiki Kaisha, Tokyo 146-8501 (JP)
(72) Inventor: SHINDO, Go, Ohta-ku, Tokyo, 146-8501 (JP)
(74) Representative: TBK

(57) **Abstract**

An image forming apparatus comprising: exposure means (400) configured to form an electrostatic latent image based on an image signal; and determination means (200)configured to determine a usage amount of developer. The image signal is a signal that indicates exposure of a dot at a first level and indicates non-exposure of a dot at a second level. The determination means (400) is further configured to obtain a first counter value indicating a number of times the image signal was at the first level, and an n-consecutive counter value indicating a number of times the first level occurred consecutively n times at a sampling timing indicated by a sampling signal, and determine the usage amount of the developer with a value based on the first counter value and the n-consecutive counter value as an input of a learned model.

## Description

### TECHNICAL FIELD

The present disclosure relates to a technology for determining an amount of toner used in image formation.

### BACKGROUND

An electrophotographic image forming apparatus forms an electrostatic latent image by exposing a photosensitive member, and forms an image by developing the electrostatic latent image with toner which is a developer. An electrophotographic image forming apparatus is, for example, a printer, a copier, or a facsimile. To determine the necessity of toner replenishment or replacement of a cartridge containing toner, the image forming apparatus determines a usage amount (consumption amount) of toner in image formation. The image forming apparatus can determine a remaining amount of toner in the image forming apparatus based on the usage amount of toner in image formation.

A simple method for determining an amount of toner used in image formation on one sheet is to multiply the number of dots on which toner is to be attached on the sheet, that is, dots to be exposed on a photosensitive member (hereinafter referred to as exposure dots), by the usage amount of toner for one exposure dot. However, it is known that the number of exposure dots and the usage amount of toner do not have a linear relationship. This is based on the fact that a shape of an electrostatic latent image formed on the photosensitive member, more specifically, a potential distribution, changes according to a pattern of the exposure dots. Therefore, in this simple method, an error becomes large.

Japanese Patent Laid-Open No. 2002-174929 discloses a configuration that corrects a toner usage amount with a coefficient determined by using a number of consecutive exposure dots. US-2005-0169648 discloses a configuration that corrects a toner usage amount with a coefficient determined by using an interval between exposure dots.

When halftone processing such as a dither method is used, exposure dots grow in complex shapes as a gradation value increases. Therefore, even if a usage amount of developer is corrected with a coefficient determined by using the number of consecutive exposure dots or the interval between exposure dots, the usage amount of developer cannot be accurately determined.

### SUMMARY

The present disclosure provides a technology for accurately determining a usage amount of developer in image formation.

The present disclosure in its first aspect provides an image forming apparatus as specified in claim 1. Optional features are specified in claim 2 to 10.

The present disclosure in its second aspect provides an image forming apparatus as specified in claim 11.

The present disclosure in its third aspect provides an image forming apparatus as specified in claim 12. Optional features are specified in claim 13 to 14.

The present disclosure in its fourth aspect provides an image forming apparatus as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram showing a schematic configuration example of an image forming apparatus according to some embodiments.
FIG. 2 is a diagram showing an exposure configuration example of an image forming apparatus according to some embodiments.
FIG. 3 is a diagram showing a configuration example of a count unit according to some embodiments.
FIGS. 4A to 4D are diagrams showing examples of dither matrices according to some embodiments.
FIG. 5 is a diagram showing an example of a learned model.
FIG. 6 is a diagram showing an example of learning data.
FIG. 7 is a flowchart of a process for determining a usage amount of toner according to one embodiment.
FIG. 8 is a diagram showing an example of a determination result according to one embodiment.
FIG. 9 is a diagram showing an example of a determination result according to one embodiment.
FIG. 10 is a diagram showing a configuration example of an exposure unit according to one embodiment.
FIG. 11 is a diagram showing an example of a change in scanning speed according to one embodiment.
FIG. 12 is a diagram showing a configuration example of a count unit according to one embodiment.
FIG. 13 is a diagram showing an example of a determination result according to one embodiment.
FIGS. 14A and 14B are explanatory diagrams of input values to a learned model.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

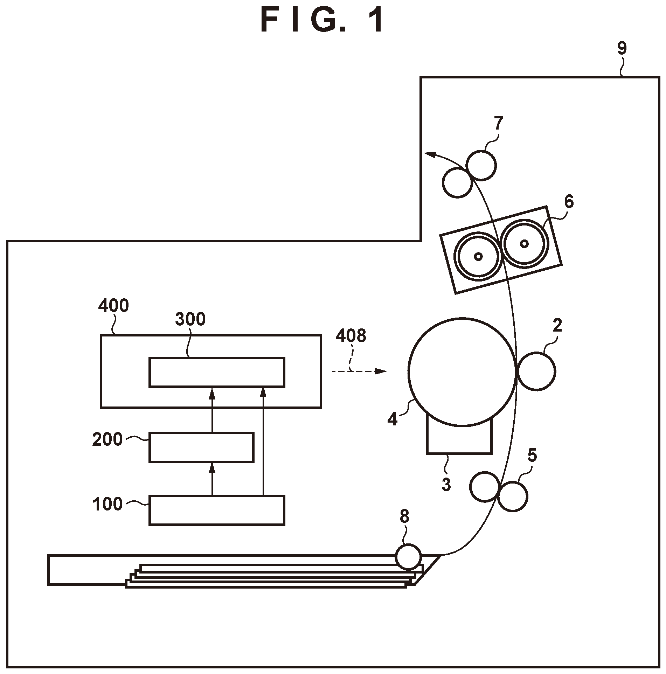

FIG. 1 shows a schematic overview example of an image forming apparatus 9 used for description of each embodiment. During image formation, a photosensitive member 4 is driven to rotate in a counterclockwise direction in the figure. During image formation, the photosensitive member 4 is charged to a uniform potential by a charger (not shown). An exposure unit 400 includes a drive unit 300. The drive unit 300 scans and exposes the photosensitive member 4 by emitting scanning light 408 based on an image signal (VDO signal) output from an image signal generating unit 100 and a control signal output from a control unit 200. A direction in which the photosensitive member 4 is scanned and exposed by the scanning light 408 corresponds to a rotation axis direction of the photosensitive member 4, and is also referred to as a main scanning direction. A direction orthogonal to the main scanning direction is also referred to as a sub-scanning direction. An electrostatic latent image is formed on the photosensitive member 4 by repeatedly scanning the photosensitive member 4, which is driven to rotate, with the scanning light 408 for each line in the main scanning direction. A developing device 3 develops the electrostatic latent image formed on the photosensitive member 4 with toner, which is a developer, by outputting a developing voltage, thereby forming an image (toner image) on the photosensitive member 4.

A feeding roller 8 feeds a sheet contained in a cassette to a conveyance path. A roller 5 conveys the sheet fed to the conveyance path to a position facing the photosensitive member 4. A transfer roller 2 transfers the image on the photosensitive member 4 to the sheet by outputting a transfer voltage. The sheet may also be called a recording medium or a recording material. A fixing device 6 thermally fixes the image transferred to the sheet onto the sheet. After fixing the image, the sheet is discharged to an outside of the image forming apparatus 9 by a roller 7. A conveyance direction of the sheet corresponds to the sub-scanning direction. A width direction orthogonal to the conveyance direction corresponds to the main scanning direction.

Although the image forming apparatus 9 shown in FIG. 1 forms a monochrome image, each embodiment of the present disclosure can also be applied to an image forming apparatus that forms a color image using toner of a plurality of colors. Furthermore, although the image forming apparatus 9 shown in FIG. 1 directly transfers an image formed on the photosensitive member 4 to a sheet, each embodiment of the present disclosure can also be applied to an image forming apparatus that transfers an image formed on the photosensitive member 4 to a sheet via an intermediate transfer member.

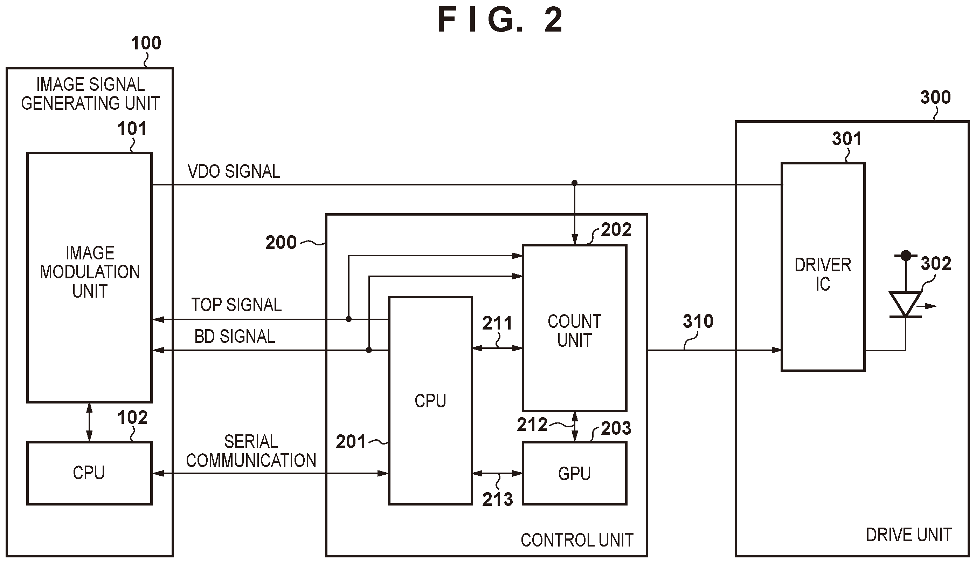

FIG. 2 shows a configuration example of the image signal generating unit 100, the control unit 200, and the drive unit 300. The drive unit 300 includes a light source 302 that emits scanning light 408 and a driver integrated circuit (IC) 301 that drives the light source 302.

The image signal generating unit 100 includes a central processing unit (CPU) 102 which is a processor, and the control unit 200 includes a CPU 201. The CPU 102 and the CPU 201 perform serial communication for transmitting and receiving control signals in image formation. During image formation, the CPU 201 outputs a TOP signal and a BD signal to an image modulation unit 101 of the image signal generating unit 100. The TOP signal is a signal for the image modulation unit 101 to determine a formation start timing of an electrostatic latent image corresponding to an image to be formed on one sheet. The BD signal is a signal for the image modulation unit 101 to determine a scan start timing of one line in the main scanning direction. The TOP signal is also called a sub-scanning synchronization signal, and the BD signal is also called a main scanning synchronization signal.

When the image signal generating unit 100 receives a print job from a host computer (not shown), the CPU 102 performs various image processing on image information received in the print job. The image processing includes halftone processing by a dither method or the like. The CPU 102 outputs the image information after the halftone processing to the image modulation unit 101.

The image modulation unit 101 generates a VDO signal, which is an image signal, based on the image information after the halftone processing received from the CPU 102. The VDO signal may be, for example, a pulse width modulation (PWM) signal. The driver IC 301, for example, turns on the light source 302 when the VDO signal is at a high level (first level), and turns off the light source 302 when the VDO signal is at a low level (second level). After receiving the TOP signal, every time the image modulation unit 101 receives the BD signal, the image modulation unit 101 outputs a VDO signal for one line in the main scanning direction to the driver IC 301 according to an image clock signal. For example, between two adjacent rising timings of the image clock signal, the image modulation unit 101 outputs a VDO signal indicating exposure/non-exposure of one dot. Hereinafter, the frequency of the image clock signal is denoted as "the frequency of the VDO signal". A control signal 310 is a signal for controlling light emission luminance and the like of the light source 302.

The control unit 200 includes, in addition to the CPU 201, a graphics processing unit (GPU) 203 and a count unit 202. The CPU 201 and the count unit 202 are connected by a bus 211. The GPU 203 and the count unit 202 are connected by a bus 212. The CPU 201 and the GPU 203 are connected by a bus 213. As shown in FIG. 2, the VDO signal, the TOP signal, and the BD signal are input to the count unit 202. Hereinafter, a configuration of the count unit 202 will be described.

### <Configuration of Count Unit>

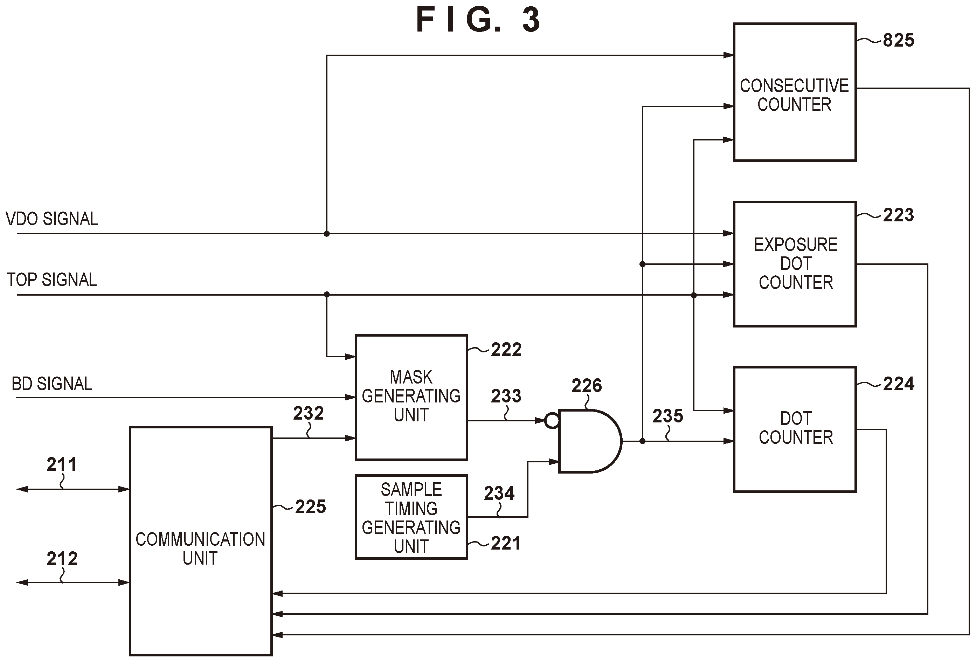

FIG. 3 shows a configuration example of the count unit 202. A communication unit 225 performs communication with the CPU 201 via the bus 211 and communication with the GPU 203 via the bus 212. The communication unit 225 sets a mask setting received from the CPU 201 in a mask generating unit 222. The mask setting includes a sub-scanning mask setting and a main scanning mask setting. The sub-scanning mask setting indicates a sub-scanning mask period based on the TOP signal. The main scanning mask setting indicates a main scanning mask period based on the BD signal. In the following description, the sub-scanning mask period and the main scanning mask period are collectively referred to as the "mask period". The TOP signal and the BD signal are input to the mask generating unit 222. The mask generating unit 222 outputs a mask signal 233 to a logic circuit 226 based on the TOP signal and the BD signal, and the above-described mask setting. In this example, the mask generating unit 222 outputs a high-level mask signal during the mask period, and outputs a low-level mask signal during a period different from the mask period. The period different from the mask period corresponds to a period during which an electrostatic latent image corresponding to an image to be formed on a sheet is formed on the photosensitive member 4, and hereinafter is also referred to as a "drawing period".

A sample timing generating unit 221 generates a sample timing signal 234 and outputs it to the logic circuit 226. The sample timing signal 234 is also a clock signal. In this example, a period of the sample timing signal 234 is set to be the same as a formation period of one dot on the photosensitive member 4. That is, the frequency of the sample timing signal 234 is made the same as the frequency of the VDO signal. As an example, the frequency of the sample timing signal 234 is 50 MHz, and the formation period of one dot is 20 [ns].

While the mask signal 233 is at a low level, that is, in the drawing period, the logic circuit 226 outputs the sample timing signal 234 as a sampling signal 235 to a consecutive counter 825, an exposure dot counter 223, and a dot counter 224.

When the dot counter 224 receives the TOP signal, it clears a held counter value to 0, and counts a number of times the sampling signal 235 rises from a low level to a high level. Since the sampling signal 235 is output during the drawing period, at a timing when formation of an electrostatic latent image to be formed on one sheet is finished, the counter value indicated by the dot counter 224 indicates a total number of dots to be exposed for attaching toner, that is, exposure dots, and dots not to be exposed, that is, dots for which not to attach toner (hereinafter, non-exposure dots). In the following description, the total number of dots of an electrostatic latent image formed on one sheet is denoted as the "dot number" of the sheet. The dot counter 224 is a counter for the dot number of a sheet.

The exposure dot counter 223 clears its counter value to 0 upon reception of the TOP signal. The exposure dot counter 223 increases the counter value by 1 when the VDO signal is at a high level at a timing when the sampling signal 235 changes from a low level to a high level (hereinafter, sampling timing). That is, the exposure dot counter 223 counts the number of times the VDO signal was at the high level using the sampling signal 235 as a synchronization signal. Therefore, at a timing when formation of an electrostatic latent image corresponding to an image to be formed on one sheet is finished, the counter value indicated by the exposure dot counter 223 indicates a total number of exposure dots. In the following description, the total number of exposure dots in an electrostatic latent image corresponding to an image formed on one sheet is denoted as an "exposure dot number" of the sheet. The exposure dot counter 223 is a counter for the exposure dot number of a sheet.

The consecutive counter 825 has N consecutive counters from a 1-consecutive counter to an N-consecutive counter. N is a value equal to or less than the number of dots constituting one line. Each of the 1-consecutive counter to the N-consecutive counter clears its counter value to 0 upon reception of the TOP signal. An n-consecutive counter (n is a value from 1 to N) increases its counter value by 1 when the VDO signal is at the high level consecutively n times at the sampling timing. In the present embodiment, the frequency of the sampling signal 235 and the frequency of the VDO signal are the same. Therefore, in the present embodiment, when n exposure dots are consecutive in the main scanning direction, the n-consecutive counter increases its counter value by 1. For example, the counter value of a 3-consecutive counter is increased by 1 only when three exposure dots are consecutive in the main scanning direction, and is not changed when the number of consecutive exposure dots in the main scanning direction is 2 or less, or 4 or more. In the following description, the counter value of the n-consecutive counter is denoted as an "n-consecutive counter value". At a timing when formation of an electrostatic latent image corresponding to an image to be formed on one sheet is finished, the n-consecutive counter value indicates a number of occurrences of n-consecutive exposure dots on the sheet. In the following description, in an electrostatic latent image corresponding to an image formed on one sheet, the number of occurrences of n-consecutive exposure dots is denoted as an "n-consecutive frequency" of the sheet. The consecutive counter 825 is a counter for a 1-consecutive frequency to an N-consecutive frequency on a sheet.

The dot number, exposure dot number, and n-consecutive frequency of a sheet are notified to the CPU 201 and the GPU 203 via the communication unit 225.

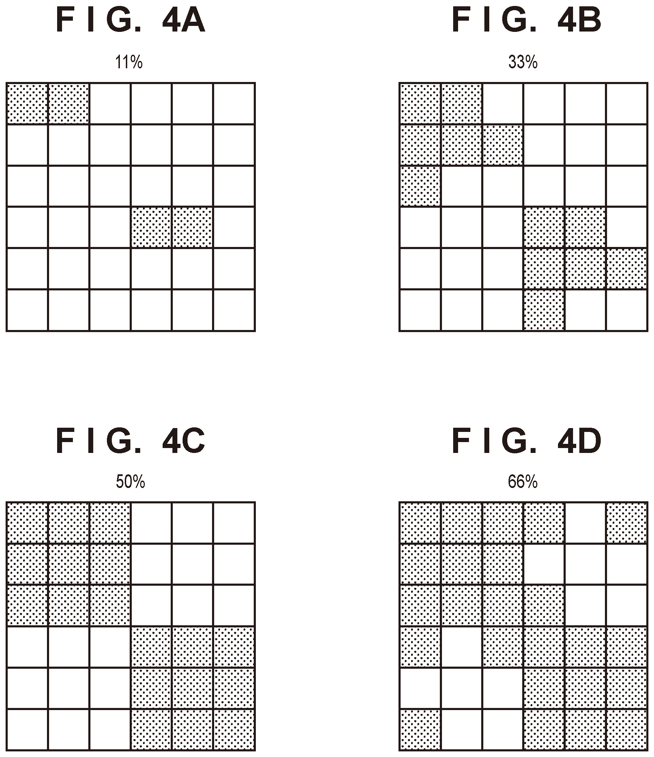

FIGS. 4A to 4D respectively show dither matrices with area ratios of 11%, 33%, 50%, and 66% among dither matrices used by the CPU 102 in halftone processing. A horizontal direction in FIGS. 4A to 4D corresponds to the main scanning direction, and a vertical direction corresponds to the sub-scanning direction. Further, in FIGS. 4A to 4D, shaded dots indicate exposure dots, and other dots indicate non-exposure dots. In this example, the CPU 102 forms a gradation image by repeating 6 vertical dots × 6 horizontal dots dithering. Note that the CPU 102 also uses dither matrices of other area ratios in the halftone processing. As shown in FIGS. 4A to 4D, as the area ratio increases, exposure dots grow in complex patterns.

### <Learned Model>

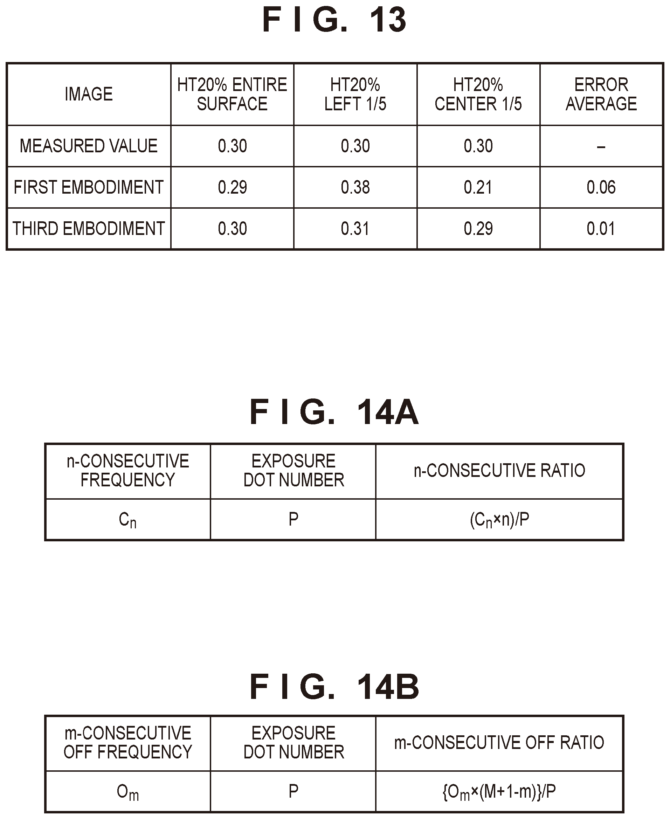

In the present embodiment, a usage amount of toner is determined using a trained machine learning model (hereinafter simply referred to as a learned model). For an input of the learned model, an "n-consecutive ratio" obtained based on the n-consecutive frequency and the exposure dot number is used. As shown in FIG. 14A, assuming that a value of the n-consecutive frequency is Cₙ and the exposure dot number is P, the n-consecutive ratio is obtained as (Cₙ × n) / P. The n-consecutive ratio is a value obtained by dividing n times the n-consecutive frequency by the exposure dot number. The n-consecutive ratio indicates an occurrence ratio per one exposure dot for n consecutive exposure dots. The learned model takes the 1-consecutive ratio to the N-consecutive ratio as inputs and outputs a correction value C. For example, let R be a reference value of a toner amount consumed by one exposure dot. When the exposure dot number of a sheet is P, the CPU 201 obtains the usage amount of toner in image formation on the sheet as P × R × C.

The learned model can be generated by deep learning. This model generates feature quantities and coupling weighting coefficients for learning by using a neural network. The learning algorithm is not limited to deep learning, and a regression tree, random forest, gradient boosting tree, support vector machine, or the like can be used.

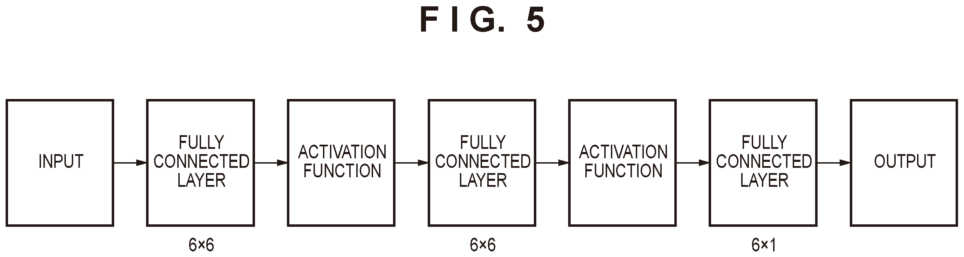

FIG. 5 shows an example of a learned model. The learned model includes two activation functions and three fully connected layers. The first and second fully connected layers have six columns of six neurons. The third fully connected layer has one column of six neurons.

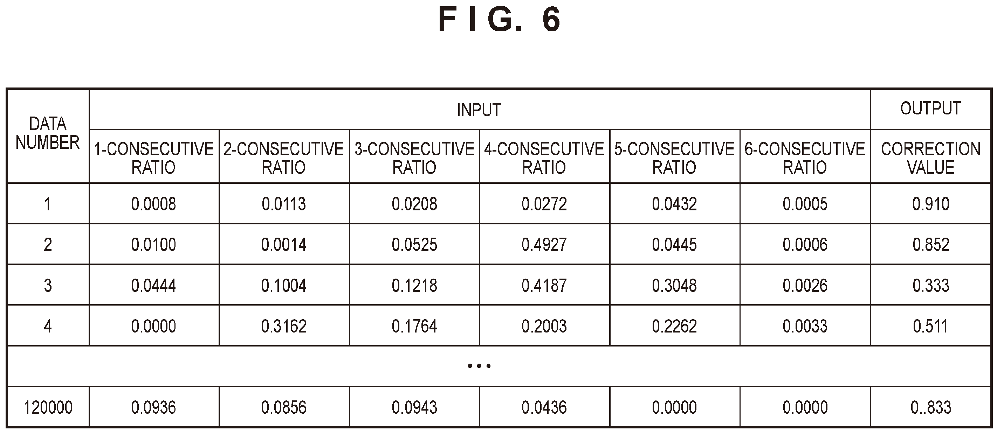

FIG. 6 shows an example of learning data used for machine learning. In FIG. 6, N = 6. The learning data shown in FIG. 6 can be collected by various methods. As an example, the same image is formed on 100 sheets, and a toner usage amount per sheet is obtained from a toner amount used for image formation on the 100 sheets. Then, a correction value C is obtained by dividing the toner usage amount per sheet by a product of the exposure dot number and the reference value R. Further, the n-consecutive ratio is obtained by dividing n times the n-consecutive frequency (n is an integer from 1 to 6 in FIG. 6) counted by the count unit 202 during image formation by the exposure dot number. Accordingly, one piece of learning data is generated.

Further, based on a result of actually performing image formation, learning data corresponding to an image for which image formation was not actually performed can also be created. For example, an image composed only of a dither matrix with an area ratio of 33% shown in FIG. 4B is formed over the entire surface of a sheet, and one piece of learning data is generated as described above. Learning data in a case where an image composed only of a dither matrix with an area ratio of 33% is formed on only half of one sheet is obtained by halving each value in the case where the image is formed on the entire surface of the sheet.

Further, for example, an image composed only of a dither matrix with an area ratio of 50% shown in FIG. 4C is formed over the entire surface of a sheet, and one piece of learning data is generated as described above. Regarding an image in which only the dither matrix with the area ratio of 33% is used in one half of the sheet and only the dither matrix with the area ratio of 50% is used in the other half, learning data can be obtained based on a result of forming an image composed only of the dither matrix with the area ratio of 50% and a result of forming an image composed only of the dither matrix with the area ratio of 33%.

A plurality of coefficients of the learned model, that is, information indicating the learned model, and the reference value R can be stored in a non-volatile memory (not shown) of the control unit 200. In a case of an image forming apparatus 9 using a replaceable toner cartridge, the plurality of coefficients of the learned model and the reference value R can be configured to be stored in a non-volatile memory of the toner cartridge. By storing the plurality of coefficients of the learned model in the non-volatile memory of the toner cartridge, the usage amount of toner can be determined using a learned model appropriate for a type of the toner cartridge. Further, the plurality of coefficients of the learned model can be stored in the non-volatile memory (not shown) of the control unit 200, and some coefficients to be changed or added according to the type of the toner cartridge can be configured to be stored in the non-volatile memory of the toner cartridge.

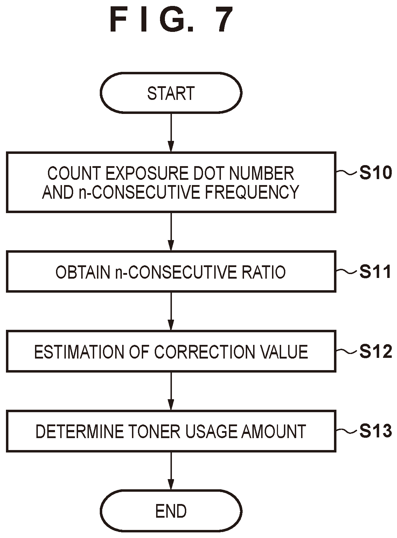

FIG. 7 is an exemplary flowchart of a process for determining a usage amount of toner in image formation on one sheet. In step S10, the count unit 202 counts the exposure dot number and the n-consecutive frequency based on the VDO signal. In step S11, the GPU 203 obtains the n-consecutive ratio based on the exposure dot number and the n-consecutive frequency. In step S12, the GPU 203 obtains the correction value C by using the n-consecutive ratio as an input to the learned model. In step S13, the CPU 201 determines the toner amount used in image formation on one sheet based on the exposure dot number, the reference value R, and the correction value C.

Note that a configuration may be adopted in which the CPU 201 performs part or all of the processing described as being performed by the GPU 203. Further, a configuration may be adopted in which the GPU 203 performs part or all of the processing described as being performed by the CPU 201.

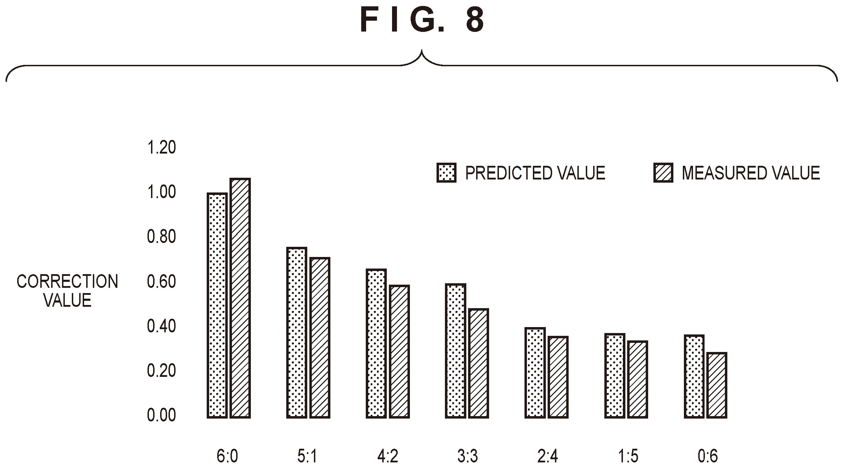

FIG. 8 shows correction values C (predicted values) determined using the learned model and actual correction values (measured values) for several images. Images resulting from changing a dither matrix with an area ratio of 80% and a dither matrix with an area ratio of 20% in a ratio range from 6:0 to 0:6 were used. As shown in FIG. 8, the correction value C can be accurately determined based on the 1-consecutive ratio to the N-consecutive ratio.

By increasing a maximum value N of the number of consecutive exposure dots counted by the consecutive counter 825, determination accuracy of the correction value C can be increased. However, as the maximum value N increases, a hardware scale of the consecutive counter 825 increases. Therefore, the maximum value N is determined in advance based on the hardware scale allowed for the consecutive counter 825, the accuracy required for the correction value C, and the like.

In the present embodiment, the 1-consecutive ratio to the N-consecutive ratio are used as inputs to the learned model, but the 1-consecutive frequency to the N-consecutive frequency and the exposure dot number may be used as inputs to the learned model. Further, in the present embodiment, a value obtained by dividing n times the n-consecutive frequency by the exposure dot number is used as the n-consecutive ratio. However, since a multiplier for obtaining the n-consecutive ratio is constant at value n, a value obtained by dividing the n-consecutive frequency by the exposure dot number can also be used as the n-consecutive ratio. Further, in the present embodiment, the correction value C is estimated by the learned model, but a configuration may be adopted in which a usage amount of toner for one exposure dot, that is, a value obtained by multiplying the reference value R and the correction value C in the above description is estimated by the learned model. Furthermore, a configuration may be adopted in which a value obtained by multiplying the reference value R, the correction value C, and the exposure dot number in the above description, that is, a usage amount of toner in image formation on one sheet, is estimated by the learned model.

Furthermore, other parameters that can affect the usage amount of toner can additionally be used as inputs to the learned model. As an example, a value based on the number of consecutive non-exposure dots or a value based on a number of occurrences of exposure dots and non-exposure dots adjacent in the main scanning direction can be used as inputs to the learned model. Note that the number of occurrences of exposure dots and non-exposure dots adjacent in the main scanning direction corresponds to a number of occurrences of edges in the main scanning direction. Furthermore, a partial printing ratio, that is, a printing ratio of each area into which a sheet is divided, may be used as an input to the learned model. Further, in the present embodiment, the dot number of a sheet is not used as an input to the learned model, but a configuration may be adopted in which the dot number of a sheet or a value obtained based on the dot number is used as an input to the learned model.

Further, as described above, in order to compensate for a limitation on the maximum value N of the number of consecutive exposure dots counted by the consecutive counter 825, a configuration may be adopted in which a number of exposure dots with a consecutive number of (N + 1) or more is used as an input to the learned model. Specifically, assuming that the exposure dot number is P and the value of the n-consecutive frequency is Cₙ, P - Σ(Cₙ × n) indicates a total number of exposure dots having a consecutive number of (N + 1) or more in the main scanning direction. Note that Σ indicates summation from 1 to N. Therefore, a configuration may be adopted in which the total number of exposure dots having a consecutive number of (N + 1) or more, or a value obtained by dividing the total number of exposure dots having a consecutive number of (N + 1) or more by the exposure dot number P, or the like, is used as an input to the learned model.

Furthermore, environmental temperature, environmental humidity, absolute water content, a number of sheets printed so far, lifespan of a toner cartridge, exposure luminance by the scanning light 408, and the like can be used as inputs to the learned model.

Note that in the present embodiment, the frequency of the sampling signal 235 is set to be the same as the frequency of the VDO signal, but a configuration may be adopted in which the frequency of the sampling signal 235 is set to an integer multiple of the frequency of the VDO signal.

As described above, by using a learned model that takes continuity of exposure dots as an input, a usage amount of toner can be accurately predicted. Therefore, the CPU 201 can accurately determine a remaining amount of toner in the image forming apparatus 9 based on the usage amount of toner for each sheet. Further, the CPU 201 can also be configured to control image forming conditions such as a transfer voltage of the transfer roller 2 and a fixing temperature of the fixing device 6 based on a determination result of a toner amount used in image formation on a sheet.

### <Second Embodiment>

Next, a second embodiment will be described, focusing on differences from the first embodiment. A consecutive counter 825 of a count unit 202 of the present embodiment has a 1-consecutive off-counter to an M-consecutive off-counter. M is a value one smaller than the number of dots in the main scanning direction of a matrix used by the CPU 102 in halftone processing. Each of the 1-consecutive off-counter to the M-consecutive off-counter clears its counter value to 0 upon reception of the TOP signal. An m-consecutive off-counter (m is a value from 1 to M) increases its counter value by 1 when the VDO signal is at the low level consecutively m times at the sampling timing. In the present embodiment, the frequency of the sampling signal 235 and the frequency of the VDO signal are the same. Therefore, in the present embodiment, the m-consecutive off-counter increases its counter value by 1 when m non-exposure dots are consecutive in the main scanning direction. For example, a counter value of a 2-consecutive off-counter is increased by 1 only when two non-exposure dots are consecutive in the main scanning direction, and is not changed when the number of consecutive non-exposure dots in the main scanning direction is 1 or 3 or more. In the following description, the counter value of the m-consecutive off-counter is denoted as an m-consecutive off-counter value. At a timing when formation of an electrostatic latent image corresponding to an image formed on one sheet is finished, the m-consecutive off-counter value indicates a number of occurrences of m-consecutive non-exposure dots in the main scanning direction on the sheet. In the following description, in an electrostatic latent image corresponding to an image formed on one sheet, the number of occurrences of m-consecutive non-exposure dots is denoted as an "m-consecutive off frequency" of the sheet. The consecutive counter 825 is a counter for a 1-consecutive off frequency to an M-consecutive off frequency on a sheet.

In an image subjected to dither processing (a halftone image), consecutive non-exposure dots numbering fewer than a size of a dither matrix (M + 1 in this example) are predominant. This is based on the fact that a halftone image is represented by arranging dither matrices of one or more area ratios along the main scanning direction and the sub-scanning direction.

Here, since the size of the dither matrix in the main scanning direction is (M + 1), m consecutive non-exposure dots can be regarded as equivalent to (M + 1 - m) consecutive exposure dots. That is, the m-consecutive off frequency is a counter value similar to the (M + 1 - m)-consecutive frequency of the first embodiment. However, instead of counting the high level (corresponding to exposure dots) of the VDO signal as in the first embodiment, the number of consecutive exposure dots is obtained based on a counter value of the low level (corresponding to non-exposure dots) and the size of the dither matrix, so the input has a higher relatedness to the dither processing compared to the n-consecutive frequency of the first embodiment. On the other hand, the relatedness with respect to a character image becomes lower than that in the first embodiment.

In the present embodiment, an "m-consecutive off ratio" is obtained based on the m-consecutive off frequency and the exposure dot number, and the "m-consecutive off ratio" is used as an input to the learned model. As described above, the m-consecutive off frequency is a counter value similar to the (M + 1 - m)-consecutive frequency of the first embodiment. Therefore, as shown in FIG. 14B, assuming that a value of the m-consecutive off frequency is Oₘ and the exposure dot number is P, the m-consecutive off ratio is obtained by {Oₘ × (M + 1 - m)} / P. The m-consecutive off ratio is a value obtained by dividing (M + 1 - m) times the m-consecutive off frequency by the exposure dot number. Note that a configuration in which the 1-consecutive ratio to the N-consecutive ratio of the first embodiment are further used as inputs to the learned model, or a configuration in which they are not used, can be adopted. Machine learning is performed according to the inputs used.

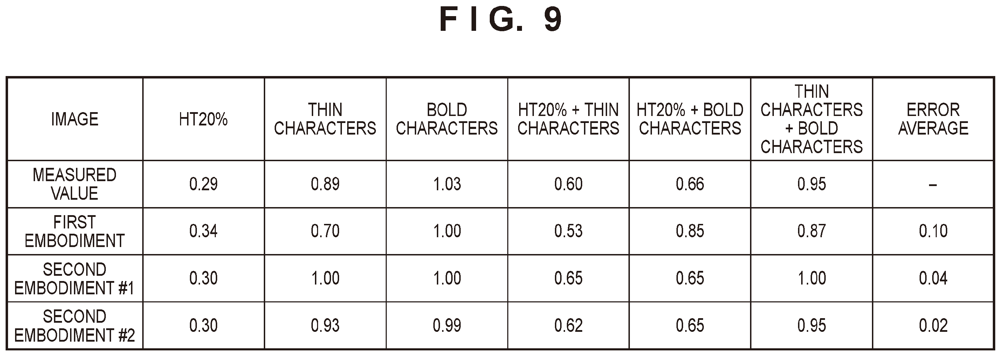

FIG. 9 shows correction values predicted by the learned model and measured values of correction values for several images. "First Embodiment" in FIG. 9 shows correction values predicted when the 1-consecutive ratio to the N-consecutive ratio described in the first embodiment are used as inputs to the learned model. "Second Embodiment #1" shows correction values predicted when the 1-consecutive off ratio to the M-consecutive off ratio described in the present embodiment are used as inputs to the learned model, but the 1-consecutive ratio to the N-consecutive ratio are not used as inputs to the learned model. "Second Embodiment #2" shows correction values predicted when the 1-consecutive off ratio to the M-consecutive off ratio described in the present embodiment and the 1-consecutive ratio to the N-consecutive ratio of the first embodiment are used as inputs to the learned model.

"HT20%" in FIG. 9 is an image with a printing ratio (ratio of exposure dot number to dot number) of 4%, composed only of a dither matrix with an area ratio of 20%. "Thin characters" in the table is an image with a printing ratio of 4%, composed only of thin characters with an average width of 2 dots. "Bold characters" in the table is an image with a printing ratio of 4%, composed only of bold characters with an average width of 8 dots. "HT20% + thin characters" in the table is an image in which half of a sheet is the above HT20% and the other half is the above thin characters. "HT20% + bold characters" is an image in which half of a sheet is the above HT20% and the other half is the above bold characters. "Thin characters + bold characters" in the table is an image in which half of a sheet is the above thin characters and the other half is the above bold characters. Error average in the table is an average across the respective images of the error with respect to the measured value.

In Second Embodiment #1, the 1-consecutive off ratio to the M-consecutive off ratio are used as inputs to the learned model. As described above, since the 1-consecutive off ratio to the M-consecutive off ratio have a low relatedness to a character image, the correction value C is 1.00 for images with only thin characters or bold characters, indicating substantially no correction. However, as for a halftone part, accuracy is higher than that in the first embodiment. This is based on the fact that in the configuration of the first embodiment, it is difficult to separate coefficients of continuity of exposure dots in a character image and continuity of exposure dots in a dither matrix in the learned model. In Second Embodiment #2, since the 1-consecutive ratio to the N-consecutive ratio and the 1-consecutive off ratio to the M-consecutive off ratio are used as inputs to the learned model, the error average is 0.02, and prediction accuracy is high for both character images and halftone images.

In the present embodiment, the 1-consecutive off ratio to the M-consecutive off ratio are used as inputs to the learned model, but the 1-consecutive off frequency to the M-consecutive off frequency and the exposure dot number may be used as inputs to the learned model. Further, in the present embodiment, a value obtained by dividing (M + 1 - m) times the m-consecutive off frequency by the exposure dot number is used as the m-consecutive off ratio. However, since a multiplier for obtaining the m-consecutive off ratio is constant at value (M + 1 - m), a value obtained by dividing the m-consecutive off frequency by the exposure dot number can also be used as the m-consecutive off ratio.

As described above, by using inputs based on continuity of non-exposure dots and a matrix size used in halftone processing, determination accuracy of a usage amount of toner in forming an image with halftone gradations can be increased. Further, by further using continuity of exposure dots as an input to the learned model, determination accuracy of a usage amount of toner in forming halftone gradation images, character images, and images in which these coexist can be increased.

### <Third Embodiment>

Next, a third embodiment will be described, focusing on differences from the first embodiment. As described using FIG. 1, the exposure unit 400 of the image forming apparatus 9 scans the photosensitive member 4 line by line with the scanning light 408. When scanning speed of the scanning light 408 in one line is constant, the exposure unit 400 uses a lens having fθ characteristics. However, using a lens having fθ characteristics increases cost and size of the exposure unit 400. For this reason, an exposure unit 400 that does not use a lens having fθ characteristics can be used. The present embodiment is to determine a usage amount of toner in an image forming apparatus 9 having an exposure unit 400 that does not use a lens having fθ characteristics.

### <Configuration of Exposure Unit>

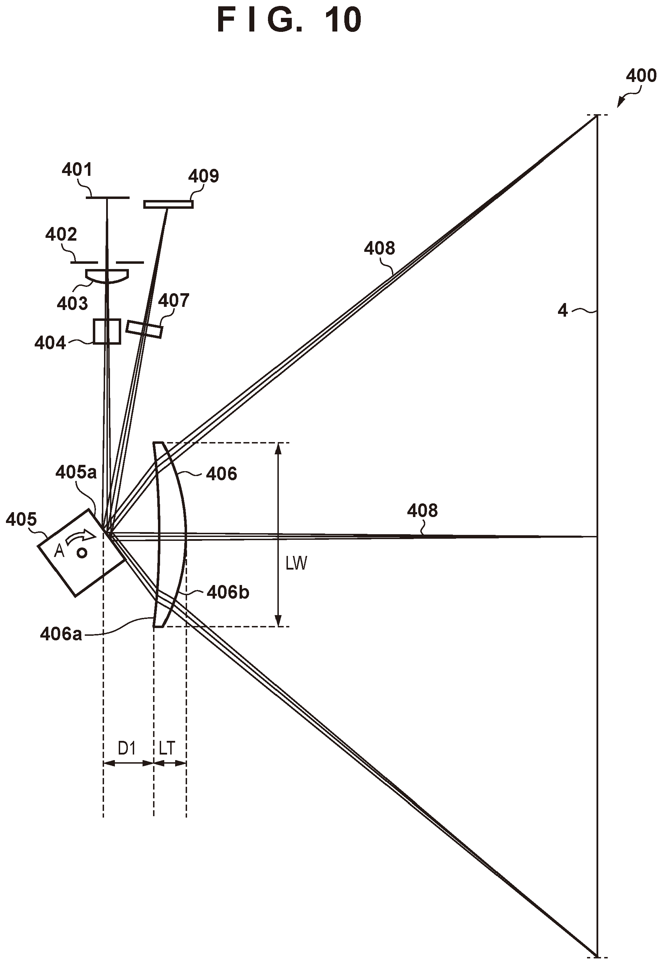

FIG. 10 shows a configuration example of the exposure unit 400 according to the present embodiment. A light beam emitted from a light source 401 is shaped into an elliptical shape by an aperture stop 402 and enters a coupling lens 403. The light beam that has passed through the coupling lens 403 is converted into substantially parallel light and enters an anamorphic lens 404. Substantially parallel light includes weakly convergent light and weakly divergent light. The anamorphic lens 404 has a positive refractive power in a main scanning cross section, and converts an incident light beam into convergent light in the main scanning cross section. Further, the anamorphic lens 404 condenses the light beam in a vicinity of a deflection surface 405a of a deflector 405 in a sub-scanning cross section, and forms a line image long in the main scanning direction.

The light beam that has passed through the anamorphic lens 404 is reflected/deflected by a deflection surface (reflection surface) 405a of a deflector (polygon mirror) 405. The light beam reflected by the reflection surface 405a passes through an imaging lens 406 and forms a predetermined spot on a surface of the photosensitive member 4 as scanning light 408. The exposure unit 400 moves this spot in the main scanning direction by rotating the deflector 405 at a constant speed in a direction of arrow A using a drive unit (not shown).

The light beam reflected in a predetermined direction by the reflection surface 405a enters a BD sensor 409 via a beam detect (BD) lens 407. The BD sensor 409 notifies the control unit 200 of a timing when the light beam is received. Based on this timing, the control unit 200 generates a BD signal (FIG. 2) and outputs it to the image signal generating unit 100.

The imaging lens 406 has two optical surfaces (lens surfaces), an incident surface 406a and an exit surface 406b. The imaging lens 406 does not have fθ characteristics. Therefore, when the deflector 405 is rotated at a constant angular velocity, a moving speed of a light spot in the main scanning direction on the photosensitive member 4, that is, scanning speed, changes according to a position in the main scanning direction. By using the imaging lens 406 that does not have fθ characteristics, the imaging lens 406 can be arranged close to the deflector 405. That is, the distance D1 in FIG. 10 can be reduced. The imaging lens 406 not having fθ characteristics can have a length LW in the main scanning direction and a thickness LT in the optical axis direction smaller than an imaging lens having fθ characteristics. Therefore, the exposure unit 400 can be miniaturized by using the imaging lens 406 that does not have fθ characteristics.

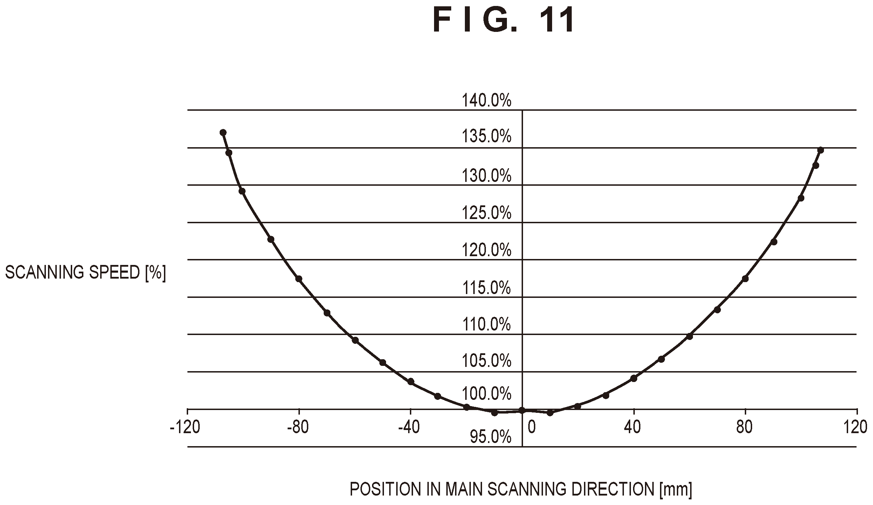

FIG. 11 shows a relationship between position in the main scanning direction and scanning speed when the imaging lens 406 according to the present embodiment is used. Note that a central position of the photosensitive member 4 in the main scanning direction is defined as position 0 in the main scanning direction. Further, the scanning speed is displayed assuming that the scanning speed at position 0 in the main scanning direction is 100%. As shown in FIG. 11, in this example, the scanning speed increases toward an end of one line.

As shown in FIG. 11, when the scanning speed changes according to the position in the main scanning direction, if the VDO signal is generated with a constant image clock signal, a length of one dot in the main scanning direction will vary depending on the position in the main scanning direction. For example, in FIG. 11, since the scanning speed at an end of a line is about 1.35 times that at a center of the line, if the VDO signal is generated with a constant image clock signal, the length of one dot at the end of the line will be about 1.35 times that at the center of the line.

For this reason, the image modulation unit 101 generates the VDO signal based on an image clock signal that changes according to scanning position. That is, in the present embodiment, the frequency of the VDO signal changes according to the scanning position. A change in the frequency of the VDO signal follows FIG. 11. That is, the frequency of the VDO signal at an end of a line is about 135% of that of the VDO signal at a center of the line. Processing for suppressing variation in length of one dot by changing the frequency of the VDO signal in this manner is called partial magnification correction. By suppressing variation in length of one dot through partial magnification correction, an exposure amount of an exposure dot at a line end becomes smaller than an exposure amount of an exposure dot at a line center. To suppress variation in exposure amount of exposure dots depending on position in the main scanning direction, the control unit 200 performs luminance correction. Specifically, by the control signal 310 in FIG. 2, the control unit 200 controls luminance of the scanning light 408 according to position in the main scanning direction.

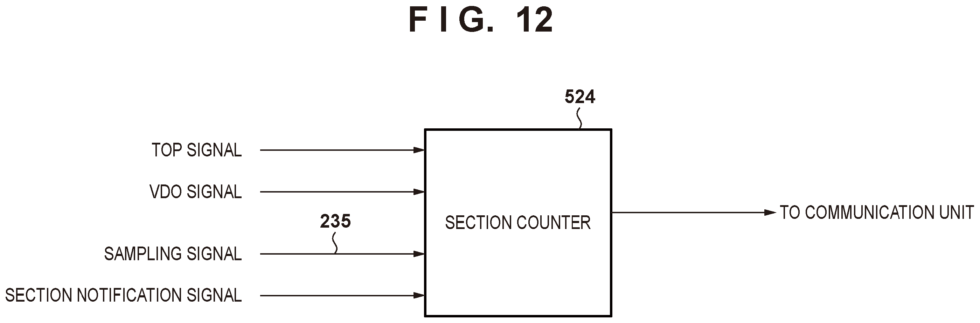

In addition to the dot counter 224, the exposure dot counter 223, and the consecutive counter 825 shown in FIG. 3, the count unit 202 of the present embodiment has a section counter 524 shown in FIG. 12. In the present embodiment, one line in the main scanning direction is divided into K sections from a first section to a K-th section. Here, K is an integer of 2 or more. In a moving direction of the scanning light 408 on the photosensitive member 4, the first section is the most upstream section, and the K-th section is the most downstream section. A section notification signal is a signal generated by the image modulation unit 101 or the CPU 201, and indicates which section among the first section to the K-th section the VDO signal output by the image modulation unit 101 corresponds to. The section counter 524 has first to K-th section counters. A k-th section counter (k is an integer from 1 to K) performs a counting operation only while the section notification signal indicates a k-th section, and does not perform a counting operation while the section notification signal indicates a section different from the k-th section. While the section notification signal indicates the k-th section, the k-th section counter increases its counter value by 1 when the VDO signal is at the high level at the sampling timing indicated by the sampling signal 235. The k-th section counter does not change its counter value when the VDO signal is at the low level at the sampling timing. The k-th section counter clears its counter value to 0 upon reception of the TOP signal.

In the present embodiment, as described above, the image forming apparatus 9 changes the frequency of the VDO signal during scanning of one line by partial magnification correction. On the other hand, in the present embodiment, as in the first embodiment, the frequency of the sampling signal 235 is made constant. For example, assume that the frequency of the VDO signal when the scanning speed in FIG. 11 is 100% and the frequency of the sampling signal 235 are the same. In this case, the frequency of the VDO signal in a section where the scanning speed in FIG. 11 is 135% is about 1.35 times the frequency of the sampling signal 235. Therefore, a section counter in a section where scanning speed is 135% will not count some dots. Conversely, assume that the frequency of 135% scanning speed in FIG. 11 and the frequency of the sampling signal 235 are the same. In this case, the frequency of the VDO signal in a section where the scanning speed in FIG. 11 is 100% is about (1/1.35) times the frequency of the sampling signal 235. Therefore, a section counter in a section where scanning speed is 100% will doubly count some dots.

Therefore, at a timing when formation of an electrostatic latent image corresponding to an image formed on one sheet is finished, a counter value indicated by the k-th section counter (k-th section counter value) is not a value indicating an exposure dot number itself in the k-th section. In other words, the counter value indicated by the k-th section counter only indicates a number of times the VDO signal in the k-th section was at the high level at the sampling timing indicated by the sampling signal 235. However, the k-th section counter value is a value that becomes larger as the exposure dot number in the k-th section increases, that is, an evaluation value by which the exposure dot number in the k-th section can be evaluated. Therefore, hereinafter, the counter value indicated by the k-th section counter is denoted as a "k-th section exposure dot number evaluation value".

For the same reason, the counter value of the exposure dot counter 223 in the present embodiment indicates a number of times the VDO signal was at the high level at the sampling timing, and is no longer a value indicating an exposure dot number itself on one sheet. Therefore, in the present embodiment, the counter value of the exposure dot counter 223 is denoted as an "exposure dot number evaluation value". The n-consecutive frequency of the consecutive counter 825 is also no longer a value indicating a number of occurrences of n-consecutive exposure dots itself, but becomes an evaluation value correlated with a number of occurrences of n-consecutive exposure dots. Therefore, in the present embodiment, the counter value of the n-consecutive counter is denoted as an "n-consecutive frequency evaluation value".

In the present embodiment, a value obtained by dividing n times the n-consecutive frequency evaluation value by the exposure dot number evaluation value is used as an n-consecutive ratio for an input to the learned model. Furthermore, a value obtained by dividing the k-th section exposure dot number evaluation value by the exposure dot number evaluation value is used as a k-th section exposure dot ratio for an input to the learned model. For example, if N = 6 and K = 16, a number of inputs to the learned model is 22. Note that the learned model is machine-learned with the n-consecutive ratio and the k-th section exposure dot ratio as inputs.

FIG. 13 shows correction values predicted by the learned model and measured values of correction values for several images. Note that "First Embodiment" in FIG. 13 shows a case where the n-consecutive ratio is used as an input to the learned model, but the k-th section exposure dot ratio is not used as an input to the learned model. "Third Embodiment" in FIG. 13 shows a case where the n-consecutive ratio and the k-th section exposure dot ratio are used as inputs to the learned model.

"HT20% entire surface" in FIG. 13 is an image in which a dither matrix with an area ratio of 20% is formed over the entire surface of a sheet. "HT20% left 1/5" in FIG. 13 is an image in which a dither matrix with an area ratio of 20% is formed only in a range of the left 1/5 in the main scanning direction. "HT20% center 1/5" in FIG. 13 is an image in which a dither matrix with an area ratio of 20% is formed only in a range of a center 1/5 in the main scanning direction. Error average is an average across the respective images of an error of a predicted value with respect to a measured value.

It can be seen from FIG. 13 that by using the k-th section exposure dot ratio as an input to the learned model, prediction accuracy of the correction value is increased. By using the exposure dot ratio of each section as an input to the learned model in this way, it is possible to perform prediction that follows changes in toner usage due to changes in the frequency of the image clock signal.

As described above, according to the present embodiment, by dividing one line into a plurality of sections in the main scanning direction and using an exposure dot ratio for each section as an input to the learned model, a usage amount of toner can be accurately determined even when scanning speed changes.

Note that in the present embodiment, the frequency of the sampling signal 235 is set to be a constant value without being changed. However, a configuration may be adopted in which the frequency of the sampling signal 235 is changed in synchronization with the frequency of the image clock signal, that is, the frequency of the VDO signal. In this case, the k-th section exposure dot number evaluation value is a value indicating a total number of exposure dots in the k-th section itself. Further, the "exposure dot number evaluation value" is a value indicating a total number of exposure dots itself. Further, the n-consecutive frequency evaluation value is a value indicating a number of occurrences of n-consecutive exposure dots itself.

In the first embodiment, the frequency of the sampling signal 235 is set to be the frequency of the VDO signal or an integer multiple of the frequency of the VDO signal, but as is clear from the description of the third embodiment, the frequency of the sampling signal 235 does not have to be the frequency of the VDO signal or an integer multiple of the frequency of the VDO signal.

Further, in each of the above-described embodiments, values to be input to the learned model were obtained by counting the VDO signal with the count unit 202. However, for example, a configuration may be adopted in which values to be input to the learned model are obtained based on image information after halftone processing in the CPU 102. In this case, the CPU 102 notifies the CPU 201 and the GPU 203 of values to be input to the learned model via serial communication. Alternatively, the CPU 102 of the image signal generating unit 100 or a GPU (not shown) that can be provided in the image signal generating unit 100 estimates a correction value using the learned model.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus comprising:
a photosensitive member (4);
exposure means (400) configured to form an electrostatic latent image composed of a plurality of lines on the photosensitive member (4) by exposing the photosensitive member (4) based on an image signal indicating whether to expose each of a plurality of dots constituting a line in a main scanning direction;
developing means (3) configured to form an image on the photosensitive member (4) by developing the electrostatic latent image with a developer; and
determination means (200) configured to determine a usage amount of the developer by the development using a learned model, wherein
the image signal is a signal that indicates exposure of a dot at a first level and indicates non-exposure of a dot at a second level different from the first level,
the determination means (200) is further configured to obtain a first counter value indicating a number of times the image signal was at the first level, and an n-consecutive counter value indicating a number of times the first level occurred consecutively n times at a sampling timing indicated by a sampling signal, and determine the usage amount of the developer with a value based on the first counter value and the n-consecutive counter value as an input of the learned model; and
n is an integer from 1 to N, and N is 2 or more and equal to or less than a number of the plurality of dots constituting the line.

2. The image forming apparatus according to claim 1, wherein
the first counter value and the n-consecutive counter value are a sum of values obtained from each of a plurality of image signals for exposing the plurality of lines constituting the electrostatic latent image.

3. The image forming apparatus according to claim 1 or 2, wherein
the determination means (200) is further configured to determine the usage amount of the developer with a value obtained by dividing the n-consecutive counter value by the first counter value, or a value obtained by dividing n times the n-consecutive counter value by the first counter value, as an input of the learned model.

4. The image forming apparatus according to any one of claims 1 to 3, further comprising halftone processing means (100) configured to perform halftone processing on image information, wherein
the image signal is generated based on the image information after the halftone processing;
the determination means (200) is further configured to obtain an m-consecutive off-counter value indicating a number of times the second level occurred consecutively m times at the sampling timing indicated by the sampling signal, and determine the usage amount of the developer with a value based on the m-consecutive off-counter value further as an input of the learned model; and
m is a value from 1 to M, and M is a value one smaller than a dot number in the main scanning direction of a matrix used in the halftone processing.

5. The image forming apparatus according to claim 4, wherein
the determination means (200) is further configured to determine the usage amount of the developer with a value obtained by dividing the m-consecutive off-counter value by the first counter value, or a value obtained by dividing (M + 1 - m) times the m-consecutive off-counter value by the first counter value, further as an input of the learned model.

6. The image forming apparatus according to any one of claims 1 to 5, wherein
the determination means (200) is further configured to obtain, for each of a plurality of sections into which the line is divided in the main scanning direction, a section counter value indicating a number of times the image signal was at the first level at the sampling timing indicated by the sampling signal, and determine the usage amount of the developer with a value based on the section counter value further as an input of the learned model.

7. The image forming apparatus according to claim 6, wherein
the determination means (200) is further configured to determine the usage amount of the developer with a value obtained by dividing the section counter value of each of the plurality of sections by the first counter value as an input of the learned model.

8. The image forming apparatus according to any one of claims 1 to 7, wherein
a frequency of the sampling signal is constant, and
a frequency of a clock signal for generating the image signal is constant.

9. The image forming apparatus according to any one of claims 1 to 7, wherein
a frequency of the sampling signal is constant, and
a frequency of a clock signal for generating the image signal is not constant.

10. The image forming apparatus according to any one of claims 1 to 9, wherein
at least some of a plurality of coefficients of the learned model are stored in a cartridge that contains the developer and is replaceable with respect to the image forming apparatus.

11. An image forming apparatus comprising:
a photosensitive member (4);
halftone processing means (100) configured to perform halftone processing on image information;
exposure means (400) configured to form an electrostatic latent image composed of a plurality of lines on the photosensitive member (4) by exposing the photosensitive member (4) based on an image signal, generated based on the image information after the halftone processing, indicating whether to expose each of a plurality of dots constituting a line in a main scanning direction;
developing means (3) configured to form an image on the photosensitive member (4) by developing the electrostatic latent image with a developer; and
determination means (200) configured to determine a usage amount of the developer by the development using a learned model,
wherein
the image signal is a signal that indicates exposure of a dot at a first level and indicates non-exposure of a dot at a second level different from the first level,
the determination means (200) is further configured to obtain a first counter value indicating a number of times the image signal was at the first level, and an m-consecutive off-counter value indicating a number of times the second level occurred consecutively m times at a sampling timing indicated by a sampling signal, and determine the usage amount of the developer with a value based on the first counter value and the m-consecutive off-counter value as an input of the learned model, and
m is a value from 1 to M, and M is a value one smaller than a dot number in the main scanning direction of a matrix used in the halftone processing.

12. An image forming apparatus comprising:
a photosensitive member (4);
exposure means (400) configured to form an electrostatic latent image composed of a plurality of lines on the photosensitive member (4) by exposing the photosensitive member (4) based on an image signal indicating whether to expose each of a plurality of dots constituting a line in a main scanning direction;
developing means (3) configured to form an image on the photosensitive member (4) by developing the electrostatic latent image with a developer; and
determination means (200) configured to determine a usage amount of the developer by the development using a learned model,
wherein
the determination means (200) is further configured to determine the usage amount of the developer with a value based on a first counter value indicating a number of dots shown to be exposed in the image signal and an n-consecutive counter value indicating a number of occurrences of n consecutive dots shown to be exposed in the image signal in the main scanning direction, as an input of the learned model, and
n is an integer from 1 to N, and N is 2 or more and equal to or less than a number of the plurality of dots constituting the line.

13. The image forming apparatus according to claim 12, further comprising halftone processing means (100) configured to perform halftone processing on image information, wherein
the image signal is generated based on the image information after the halftone processing,
the determination means (200) is further configured to determine the usage amount of the developer with a value based on an m-consecutive off-counter value indicating a number of occurrences of m consecutive dots shown not to be exposed in the image signal continued in the main scanning direction further as an input of the learned model; and
m is a value from 1 to M, and M is a value one smaller than a dot number in the main scanning direction of a matrix used in the halftone processing.

14. The image forming apparatus according to claim 12 or 13, wherein
the determination means (200) is further configured to determine the usage amount of the developer with a value based on a section counter value indicating a number of dots shown to be exposed in the image signal for each of a plurality of sections into which the line is divided in the main scanning direction, further as an input of the learned model.

15. An image forming apparatus comprising:
a photosensitive member (4);
halftone processing means (100) configured to perform halftone processing on image information;
exposure means (400) configured to form an electrostatic latent image composed of a plurality of lines on the photosensitive member (4) by exposing the photosensitive member (4) based on an image signal, generated based on the image information after the halftone processing, indicating whether to expose each of a plurality of dots constituting a line in a main scanning direction;
developing means (3) configured to form an image on the photosensitive member (4) by developing the electrostatic latent image with a developer; and
determination means (200) configured to determine a usage amount of the developer by the development using a learned model, wherein
the determination means (200) is further configured to determine the usage amount of the developer with a value based on a first counter value indicating a number of dots shown to be exposed in the image signal and an m-consecutive off-counter value indicating a number of occurrences of m consecutive dots shown not to be exposed in the image signal in the main scanning direction, as an input of the learned model, and
m is a value from 1 to M, and M is a value one smaller than a dot number in the main scanning direction of a matrix used in the halftone processing.
